# EUROPEAN PATENT APPLICATION

(11) **EP 2 521 050 A2**
(43) Date of publication of application: **07.11.2012**
(21) Application number: 12166446.0
(22) Date of filing: 02.05.2012
(51) Int. Cl.: G06F 17/30, G06F 3/023

(54) **Handheld electronic device and method for accessing bookmark**

(30) Priority: 03.05.2011 US 201161481749 P
(71) Applicant: HTC Corporation, Taoyuan County 330 (TW)
(72) Inventor: Wu, Kun-Da, Taoyuan County 330 (TW)
(74) Representative: Granleese, Rhian Jane

(57) **Abstract**

A method for accessing web page bookmark applicable to a handheld electronic device is provided. The handheld electronic device comprises a storage unit, a touch display unit and a processing unit electrically connected to the touch display unit and the storage unit. The storage unit stores a plurality of website addresses each related to at least one tag. The method comprises the steps outlined below. At least one group of searching characters is received from the touch display unit. At least one stage of search is performed in the storage unit according to the group of searching characters and the tag to generate at least one stage search result. A search result is generated by the processor according to the at least one stage search result. A handheld electronic device is also disclosed herein.

## Description

### Technical Field

The present disclosure relates to a method and a device to process data. More particularly, the present disclosure relates to a method and a handheld electronic device for accessing a web page bookmark.

### Description of Related Art

Handheld electronic devices are essential communication tools for people in the daily life for most people. Besides the traditional voice communication, the network communication is becoming an indispensable function for the handheld electronic devices. When accessing the network, the user may use bookmark to save the URL of a certain web page so as to browse the same web page in the future. However, with the increasing number of the web page in the bookmark database, it is hard for the user to quickly find the bookmark of the desired web page. Though tags have been used to categorize the bookmark of the web page, it is still not an efficient way of searching of the bookmark.

Accordingly, there still is a need of a method and a handheld electronic device for accessing a web page bookmark quickly. The present disclosure addresses such a need.

### SUMMARY

An aspect of the present disclosure is to provide a method for accessing a web page bookmark applicable to a handheld electronic device, wherein the handheld electronic device comprises a storage unit, a touch display unit and a processing unit, in which the processing unit is electrically connected to the touch display unit and the storage unit and the storage unit stores a plurality of website addresses each related to at least one tag. The method for accessing a web page bookmark comprises the steps outlined below. (a) At least one group of searching characters is received from the touch display unit. (b) At least one stage of search in the storage unit is performed by the processing unit according to the at least one group of searching characters and the tag to generate at least one stage search result. Further, (c) A search result is generated according to the at least one stage search result.

Another aspect of the present disclosure is to provide a handheld electronic device. The handheld electronic device comprises a storage unit, a touch display unit and a processing unit. The storage unit is configured to store a plurality of website addresses each related to at least one tag. The touch display unit is configured to receive at least one group of searching characters. The processing unit is electrically connected to the touch display unit and the storage unit, and is configured to perform at least one stage of search in the storage unit to generate a search result. Each of the at least one stage of search is performed according to the at least one group of searching characters and the tag to generate a stage search result and the processing unit generates the search result according to the stage search result.

It is to be understood that both the foregoing general description and the following detailed description are by examples, and are intended to provide further explanation of the disclosure as claimed.

### BRIEF DESCRIPTION OF THE DRAWINGS

The disclosure can be more fully understood by reading the following detailed description of the embodiment, with reference made to the accompanying drawings as follows:
FIG. 1 is a block diagram of a handheld electronic device in an embodiment of the present disclosure;
FIG. 2A is a top view of the handheld electronic device depicted in FIG. 1;
FIG. 2B is a top view of the handheld electronic device in another embodiment of the present disclosure;
FIG. 3A is a diagram of the handheld electronic device after receiving the next group of search characters;
FIG. 3B is a top view of the handheld electronic device in another embodiment of the present disclosure; and
FIG. 4 is a flow chart of a method for accessing bookmark in an embodiment of the present disclosure.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts.

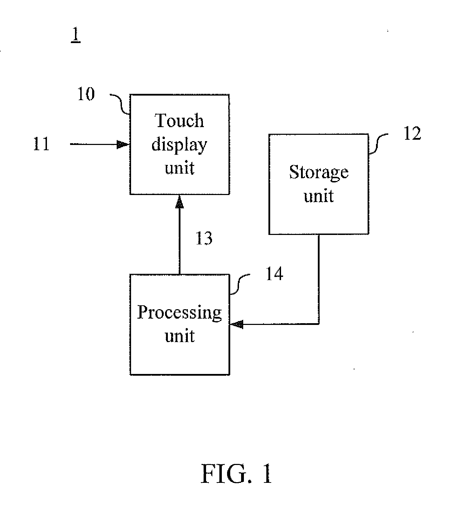

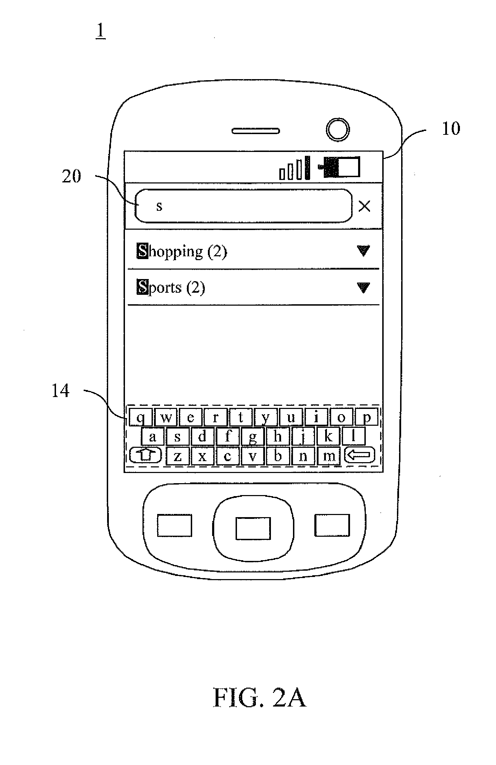

FIG. 1 is a block diagram of a handheld electronic device 1 in an embodiment of the present disclosure. FIG. 2A is a top view of the handheld electronic device 1 depicted in FIG. 1. The handheld electronic device 1 comprises a touch display unit 10, a storage unit 12 and a processing unit 14.

The storage unit 12 stores a plurality of website addresses each related to at least one tag. The user can relate a web page to one or more tags according to the characteristic of the web page when the user accesses the web page to store the URL of the web page as a bookmark. For example, when the user accesses a web page of eBay^{®} including the information of the sporting goods, the user can relate the web page to the tag of 'shopping' and 'sports' and store the URL of the web page in the storage unit 12.

The touch display unit 10 is configured to receive at least one group of searching characters 11. In an embodiment, the touch display unit 10 displays a keyboard as shown in FIG. 2A, such that the user inputs the group of searching characters 11 through the keyboard, wherein the keyboard is a software keyboard in the present embodiment. In other embodiments, the physical keyboard can be adapted to allow the user to input the group of searching characters 11 as well. In an embodiment, the touch display unit 10 displays an input field 20 as shown in FIG. 2A such that the user can input the group of searching characters 11 in the input field 20.

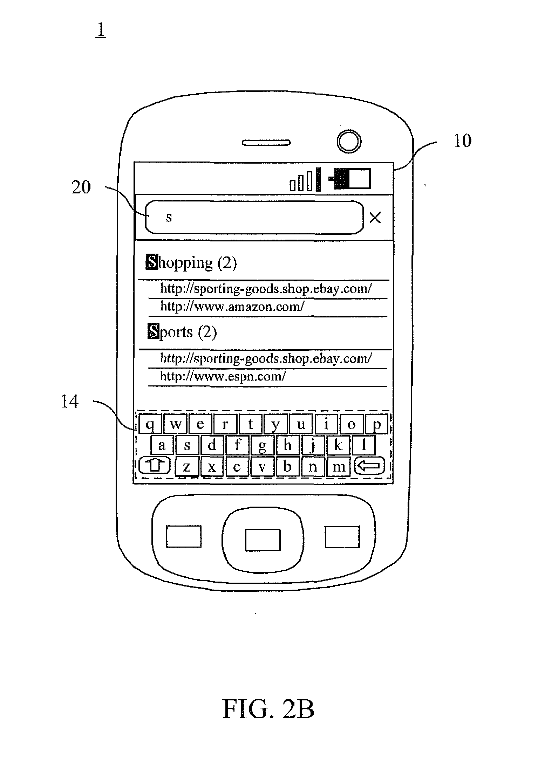

The processing unit 14 is electrically connected to the touch display unit 10 and the storage unit 12, and the processing unit 14 is configured to perform at least one stage of search in the storage unit 12 and generate a stage search result in each of the stage of search. The processing unit 14 further intersects the stage search result to generate a search result 13. For example, when the touch display unit 10 receives a character's', the processing unit 14 searches the storage unit 12 in the first stage of search according to the character's' and generates the stage search result that comprises the web pages having the tags of shopping and/or sports. In the present embodiment, the processing unit 14 displays the tag group 'shopping' and 'sports' on the touch display unit 10, as shown in FIG. 2A. FIG. 2B is a top view of the handheld electronic device 1 in another embodiment of the present disclosure. In the present embodiment, the processing unit 14 shows parts of the URL of the web pages in the tag groups 'shopping' and 'sports' on the touch display unit 10.

The touch input unit 10 is configured to further receive a confirm command (not shown) to confirm one of the tag group. For example, the user touches the touch input unit 10 such that the confirm command is received by the touch input unit 10 to select the tag group 'shopping'.

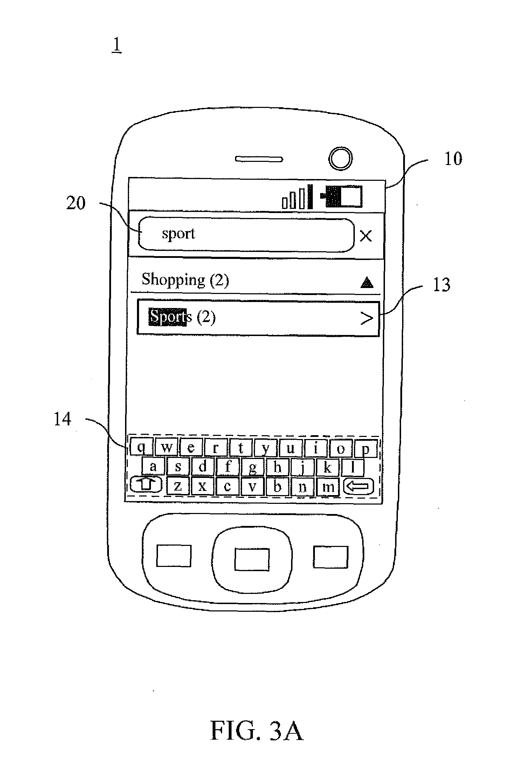

The touch display unit 10 is configured to further receive the next group of search characters 11 to perform the next stage of search. FIG. 3A is a diagram of the handheld electronic device 1 after receiving the next group of search characters 11. In the present embodiment, the touch display unit 10 further receives the search characters 'sport'. The processing unit 14 further searches in the storage unit 12 and displays the web pages related to the tag 'sports' to generate the stage search result. The search result 13 shown on the touch display unit 10 is the intersection of the stage search results of the first stage and the second stage of search. Therefore, the tag group 'sports' shown on the touch display unit 10 after the two stages of search is substantially the tag group related to both 'shopping' and 'sports'.

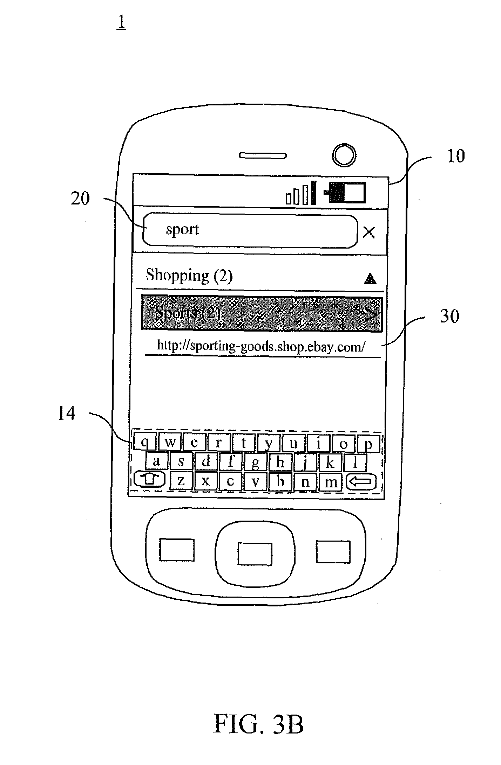

FIG. 3B is a top view of the handheld electronic device 1 in another embodiment of the present disclosure. In the present embodiment, the touch display unit 10 is configured to further receive a first selection command to unfold the selected web page group to a URL list 30. In other words, the URLs of the web pages in the selected web page group are displayed on the touch display unit 10. The touch display unit 10 is configured to further receive a second selection command to select one of the URLs on the URL list 30 and the processing unit 14 connects to a web page corresponding to the selected URL. In another embodiment, after the two stages of search, the processing unit 14 directly displays parts of the URLs of the web pages in the group of 'sports'. Accordingly, the user only has to input the selection command once to select the desired web page. In yet another embodiment, the touch display unit 10 can receive a cancel command (not shown) in each stage of search to cancel the stage search result and restore the stage search result of the previous stage.

Consequently, the handheld electronic device of the present disclosure can search the desired web page quickly by intersecting the stage search result in each stage of search according to the searching characters and the tags.

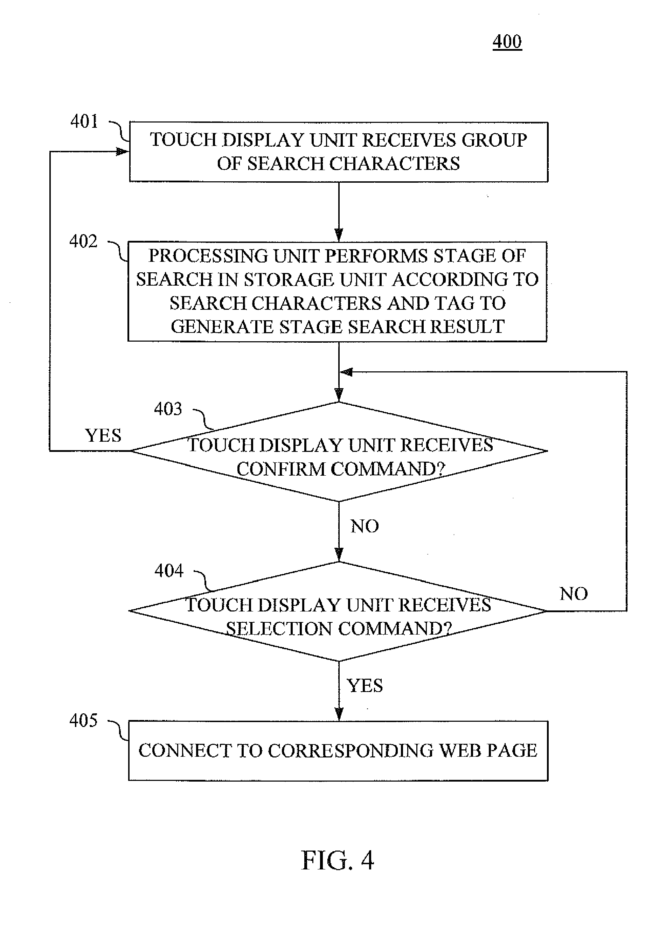

FIG. 4 is a flow chart of a method 400 for accessing bookmark in an embodiment of the present disclosure. The method 400 can be used in the handheld electronic device 1 depicted in FIG. 1. The method 400 comprises the steps outlined below. It is noteworthy that the steps are not limited to the recited sequence. That is, unless the sequence of the steps is explicitly indicated, the sequence of the steps is changeable, and all or part of the steps may be simultaneously, partially simultaneously, or sequentially performed.

In step 401, a group of searching characters is received from the touch display unit 10.

In step 402, a stage of search in the storage unit 12 is performed by the processing unit according to the group of searching characters and the tag to generate a stage search result.

In step 403, the processing unit 14 determines that whether a confirm command is received by the touch display unit 10. When the confirm command is received by the touch display unit 10, the method 400 turns back to step 401 such that the touch display unit 10 receive the next group of searching characters

When the confirm command is not received by the touch display unit 10, the method 400 continues to step 404 such that the processing unit 14 determines whether the touch display unit 10 receives a selection command. In an embodiment, the selection command comprises a first selection command to unfold the selected web page group to a URL list and a second selection command to select one of the URLs on the URL list. When the touch display unit 10 receives the selection command, the processing unit 14 connects to a corresponding web page in step 405.

Consequently, the method according to the embodiments of the present disclosure can search the desired web page quickly by intersecting the stage search result in each stage of search according to the searching characters and the tags.

It will be apparent to those ordinarily skilled in the art that various modifications and variations can be made to the structure of the present disclosure without departing from the scope or spirit of the disclosure. In view of the foregoing, it is intended that the present disclosure cover modifications and variations of this disclosure provided they fall within the scope of the following claims.

## Claims

1. A method for accessing a web page bookmark, applicable to a handheld electronic device, wherein the handheld electronic device comprises a storage unit, a touch display unit and a processing unit, in which the processing unit is electrically connected to the touch display unit and the storage unit and the storage unit stores a plurality of website addresses each related to at least one tag, the method comprises:
(a) receiving at least one group of searching characters from the touch display unit;
(b) performing at least one stage of search in the storage unit by the processing unit according to the at least one group of searching characters and the tag to generate at least one stage search result; and
(c) generating a search result by the processing unit according to the at least one stage search result .

2. The method of claim 1, further comprising the steps of:
displaying at least one tag group related to the tag by the touch display unit; and
receiving a confirm command by the touch display unit to confirm one of the tag group.

3. The method of claim 1, further comprising the step of receiving a first selection command by the touch display unit to unfold a web page group of at least one webpage group to a URL list, wherein the at least one web page group is included in the search result.

4. The method of claim 3, further comprising the steps of:
receiving a second selection command by the touch display unit to select one URL on the URL list; and
connecting to a web page corresponding to the selected URL.

5. A handheld electronic device comprising:
a storage unit configured to store a plurality of website addresses each related to at least one tag;
a touch display unit configured to receive at least one group of searching characters; and
a processing unit electrically connected to the touch display unit and the storage unit and configured to perform at least one stage of search in the storage unit to generate a search result;
wherein each of the at least one stage of search is performed according to the at least one group of searching characters and the tag to generate a stage search result and the processing unit generates the search result according to the stage search result.

6. The handheld electronic device of claim 5, wherein the processing unit further displays at least one tag group related to the tag on the touch display unit in each of the at least one stage of search and the touch display unit further receives a confirm command to confirm one of the tag group.

7. The handheld electronic device of claim 5, wherein the search result comprises at least one web page group and the touch display unit is further configured to receive a first selection command to unfold the selected web page group to a URL list.

8. The handheld electronic device of claim 7, wherein the touch display unit is further configured to receive a second selection command to select one URL on the URL list, and the processing unit is further configured to connect to a web page corresponding to the selected URL.
